# EUROPEAN PATENT APPLICATION

(11) **EP 1 278 169 A2**
(43) Date of publication of application: **22.01.2003**
(21) Application number: 02253185.9
(22) Date of filing: 07.05.2002
(51) Int. Cl.: G08B 15/00, G08B 13/196, G08B 25/08

(54) **Monitoring system**

(30) Priority: 10.05.2001 JP 2001002847 U; 25.01.2002 JP 2002016989
(71) Applicant: E.C.R. Corporation, Osaka-shi, Osaka-fu (JP)
(72) Inventor: Ogasawara, Michiharu, Osaka-shi, Osaka-fu (JP)
(74) Representative: Sherrard-Smith, Hugh

(57) **Abstract**

A system for observing an object (4,104), like crops in a field, to be monitored, in which a remote observer can monitor it whenever he/she wants. The system includes a monitor (10,110,210) in a region such as the field, an image server (30,130) far away from the region, and a portable telephone (50,150) owned by the observer, in which they are connected to each other through internet. The monitor includes a solar battery (12,112), a digital camera (118) for photographing the field, a receiving and transmitting device, and a controller; the image server includes a receiving and transmitting device, and a recorder for storing image data; and the portable telephone includes a receiving and transmitting device, and an image display device. The operation to take a photograph of the region by the digital camera (118) in the monitor is executed by the observer handling the portable telephone (50,150).

## Description

The present invention generally relates to a monitoring system, particularly relates to the monitoring system for monitoring an object or objects which exist(s) in a field or region to be monitored, watched or observed by employing a monitor camera. More particularly, the present invention relates to the monitoring system for monitoring participants who gather in a place (site or hall) of event held irregularly or temporarily, for example, and relates to the monitoring system for monitoring a state or condition of growth of any crop in which the monitoring system is employed, for example, by a remote landowner who entrusts cultivation of a land or field for gaining farm products or crops to a third person (or third party), by a remote land tenant, by a farm family involved in another business who can not go to their cultivated land so often, or by a full-time farmer who feels difficult to grasp the state or condition of growth in detail of such farm products or crops they are raising in a vast cultivated land, whenever those people (hereinafter, anyone of them being also referred to as a remote monitor) want to monitor the state or condition thereof in such cultivated fields or lands.

Conventionally, there has been provided a monitoring system for monitoring (watching or observing) movement or behavior of an object or objects (for example, a person or people) in a hall or place of an event for example. The monitor camera of the monitoring system is generally permanently fixed to a wall, a ceiling, a post, etc. of the hall or building, or fixed to a lamp post of a streetlight or streetlamp, in such a place of the event.

In order to fix the monitor camera to such a structure as the wall, etc., it is necessary to make a hole, for example, on the structure so as to arrange the fixing work and wiring of its electrical cable. As a result, a flaw including the hole remains on the structure.

The monitor camera of such a stationary type fixed on the structure, receives a supply of electric power from an electric wire in vicinity of the monitor camera. And any image taken by the monitor camera is monitored or watched on a display device which is electrically connected to the camera by wire or cable.

In this way, according to the conventional monitoring system, both of the supply of the electric power to the system, and the reception and transmission of the image (image data), are realized via wire or cable. With the arrangement, therefore, not only the location of installment of the monitor camera is limited, but also movement of the monitor camera, etc. for the purpose of changing its location of installment is not easy.

Also, in the monitoring system for watching any dubious (suspicious) character try to trespass or secretly enter into a private house, property or warehouse by the stationary type of monitor camera which is fixed on the structure or building thereof, the electricity must be continuously supplied to the monitor camera twenty-four hours throughout a year in order to continuously monitor whether the suspicious character trespasses thereinto or not, because it is not possible to predict when such a suspicious character enters in secretly. In the arrangement, both of the supply of the electric power to the system, and the reception and transmission of the image (image data), are attained through wire or cable.

On the other hand, there exits a need of monitoring a remote cultivated land for crops, far away from houses or dwellings, in which there is no supply source of electricity such as an electric wire in or around the cultivated land. Namely, there exits a need of monitoring a state or condition of growth of any crop, by a remote landowner who entrusts cultivation of a land or field for gaining farm products or crops to a third person (or third party), by a remote land tenant, by a farm family involved in another business who can not go to their cultivated land frequently, or by a full-time farmer who feels difficult to grasp the state or condition of growth in detail of such farm products or crops they are raising because he/she owns a vast cultivated land for the crops and because he/she is substantially away from the cultivated land, whenever those people want to monitor, watch or observe the state or condition thereof in such cultivated fields or lands. In this way, the remote monitor can not go to the cultivated land for crops so often on the basis of reasons of time and space (or distance), in order to visually recognize the state of growth of crops there.

Incidentally, there is no rapid change in the state in which the agricultural crops grow, in a short time. Therefore, there is no need of the remote monitor's monitoring the crops at real-time, always and continuously. That is, different from the aforementioned monitoring system for watching the suspicions person, this type of remote monitoring system is not necessary to operate always. In other words, there is no need of supplying the electricity to the remote monitoring system always, and there is no need of receiving and transmitting the image (image data) always in the remote monitoring system.

In short, according to the aforementioned conventional wire type of monitoring system, the electric power is supplied through wire or cable, and the image is received and transmitted therethrough as well. Therefore, according to the conventional wire type thereof, it is not easy to change the location of installment of the monitor camera, depending upon circumstances. For example, under a state in which the number of participants gathering in an event hall may vary as time elapses, or under a state in which different kinds of agricultural crops grow in different seasons, it is necessary to move the monitor camera for installment at proper and suitable location. However, with the conventional wire type of monitoring system, as aforementioned, not only it is difficult to change the location at which the monitor camera is mounted, depending upon circumstances, but also it is necessary to do a construction work such as making holes on a structure, upon mounting the monitor camera thereon, upon arranging its wiring, etc.

Also, in the hall of event, it is rare that events are held constantly; rather, it is usual that they are held over a particular date or dates, and time. During a period that no event is held, the monitoring system is "at rest". In the same way, during a period that an arable land is not cultivated, the monitoring system is also "at rest". Namely, under a state in which the conventional monitoring system is employed, the net working rate of the monitoring system, and the efficiency of use thereof are inevitably low on the whole.

Also, under a circumstance in which any costly monitor camera is left in such a hall of event or on such a cultivated land at night, the monitor camera may be stolen or broken by somebody.

Therefore, it is an object of the present invention to provide a monitoring system, in which a remote monitor or user, far away from a cultivated land of crops, can monitor (watch or observe) the state or condition of growth of the crops growing there, when he/she desires to monitor it.

It is another object of the present invention to provide the monitoring system, in which the location at which a monitor device of the monitoring system is set in a place or field to be monitored is not limited substantially, in which no special setting work (or installation work) of the monitor device is required, and in which the location of the monitor device can be freely changed, when he/she desires to change it.

It is still another object of the present invention to provide the monitoring system, in which the monitor device of the monitoring system can be set, only when it is necessary to employ the monitor device thereof by arranging it at any desired location, so that the efficiency of use of the monitor device (therefore, of use of the monitoring system) can be enhanced.

In accomplishing these and other objects of the present invention, according to one aspect thereof, there is provided a monitoring system for monitoring a state of growth of crops raised in a cultivated land, **characterized in that** there are provided: a monitor device for monitoring the crops, in which the monitor device is set on the cultivated land; an image server which is set on a place away from the cultivated land; and a portable terminal device which is owned by an observer who monitors the crops raised in the cultivated land, in which the monitor device, the image server and the portable terminal device are connected to internet, wherein the monitor device comprises: an electric power source which includes an electric generator for generating electricity on a basis of natural energy, and includes an electric accumulator for storing the electricity generated by the electric generator; a photographing device for taking an image of the crops; an image converter for converting the image taken by the photographing device into an image signal; and a monitor-side receiving and transmitting device for transmitting the image signal by wireless and for receiving a control signal for controlling the photographing device by wireless, with respect to the internet; and a controller for controlling each of the photographing device, the image converter and the monitor-side receiving and transmitting device, wherein the image server comprises: a server-side receiving and transmitting device for receiving and transmitting the image signal with respect to the internet; a data converter for converting the image signal into image data and for converting the image data into the image signal; and a recorder for recording the image data, wherein the portable terminal device comprises: a portable-side receiving and transmitting device for receiving the image signal from the image server by wireless and for transmitting the control signal by wireless, with respect to the internet; an image converting device for converting the image signal which is received by the portable-side receiving and transmitting device into the image; and an image display device for displaying the image, and wherein the image of the crops taken by the photographing device of the monitor device is displayed on the image display device of the portable terminal device, through the internet.

In the mechanism, the electricity operating (or driving) the electric components of the monitor device is derived from natural energy like a sun light. Therefore, even if the monitor device is set at a remote cultivated land where there is no electric power source nor electric power supply nearby, the monitor device can operate or work.

In the mechanism, the image, taken by the photographing device, of the crops raised in the cultivated land, is converted to the image signal by the image converter. The image signal is transmitted to the image server being connected to the Internet, by radio (or by wireless), by the monitor-side receiving and transmitting device. The image signal, received by the image server, is converted to the image data by the data converter of the image server, and the image data is recorded, or stored, by the recorder of the image server. The image data is transmitted to the portable terminal device being connected to the Internet by radio. The image data thus transmitted by radio, is received by the portable-side receiving and transmitting device of the portable terminal device, and then the image data is converted into the image which is displayed, or shown, on the image display device of the portable terminal device as a visual image of the crops raised in the cultivated land.

That is, according to the mechanism, the remote monitor or user, far away from the cultivated land of crops, can monitor (watch or observe) the state or condition of growth of the crops growing there, when he/she desires to monitor it.

As an electric generator which generates electricity on the basis of natural energy, it is possible to employ an electric generator making use of wind power, geothermal energy, etc. From a view point of a cost of installation of the electric generator, of a location (or place) for the installation thereof, and of efficiency of generation of electricity, it is preferable to employ a solar battery (constituted by at least one solar cell) as the electric generator.

The target object(s) which is/are intended to be monitored, watched, or observed, by the monitor device, is/are various types of agricultural crops including rice, vegetables, fruits, etc. which are raised in the cultivated land or fields, for example. The state of growth of these agricultural crops does not change so much over a short period of time like several minutes, several hours, etc.; therefore, it is not necessary to monitor the crops always. On the other hand, a large amount of electric energy is consumed when the photographing device is driven or operated. Therefore, it is preferable that the crops are photographed periodically (for example, every several hours, every half a day, every day, etc.) by the photographing device in accordance with a program which is stored on the controller of the monitor device, or that the crops are photographed ad libitum thereby in accordance with the control signal which is transmitted from the portable terminal device owned by the user.

In the mechanism, it is possible to transmit the image signal(s) by radio by the monitor-side receiving and transmitting device in a condition in which the monitor-side receiving and transmitting device is always (or continuously) connected to the server-side receiving and transmitting device by radio. However, in order to reduce the cost for the wireless communication, it is preferable that the wireless communication is made periodically (for example, every several hours, every half a day, every day, etc.) in accordance with a program which is stored on the controller of the monitor device, or that the wireless communication is made ad libitum in accordance with the control signal which is transmitted from the portable terminal device owned by the user, in the same way as that of the aforementioned photographing operation.

It is preferable that the photographing device of the monitor device is placed at a high location commanding a whole view of the crops raised in the cultivated land.

It is preferable that the photographing device of the monitor device has a shaking device for shaking an optical system thereof so as to command a wider view of the crops, and that the photographing device thereof has a zooming function to zoom a lens in the optical system so as to monitor the state of growth of the crops in more detail.

In accomplishing the aforementioned objects of the present invention, according to another aspect thereof, there is provided a monitoring system for monitoring at least one object locating in a monitoring region to be monitored, comprising: a monitor device for monitoring the at least one object, in which the monitor device is placed in the monitoring region; an image server which is set on a place away from the monitoring region; and a portable terminal device which is owned by an observer who monitors the at least one object, **characterized in that** the monitor device, the image server and the portable terminal device are connected to internet, wherein the monitor device comprises: an electric power source which includes an electric generator for generating electricity on a basis of natural energy, and includes an electric accumulator for storing the electricity generated by the electric generator; a photographing device for taking an image of the at least one object; an image converter for converting the image taken by the photographing device into an image signal; and a monitor-side receiving and transmitting device for transmitting the image signal by wireless and for receiving a control signal for controlling the photographing device by wireless, with respect to the internet; and a controller for controlling each of the photographing device, the image converter and the monitor-side receiving and transmitting device, in which the electric power source, the photographing device, the image converter, the monitor-side receiving and transmitting device and the controller are provided on a base part which can be moved, wherein the image server comprises: a server-side receiving and transmitting device for receiving and transmitting the image signal with respect to the internet; a data converter for converting the image signal into image data and for converting the image data into the image signal; and a recorder for recording the image data, wherein the portable terminal device comprises: a portable-side receiving and transmitting device for receiving the image signal from the image server by wireless and for transmitting the control signal by wireless, with respect to the internet; an image converting device for converting the image signal which is received by the portable-side receiving and transmitting device into the image; and an image display device for displaying the image, and wherein the image of the at least one object taken by the photographing device of the monitor device is displayed on the image display device of the portable terminal device, through the internet.

According to the mechanism, the monitor device can operate without receiving any electric power from outside electric power source or supply, on the basis of the aforementioned natural energy. In other words, the electric power source of the monitor device is independent electrically. Also, the monitor device is arranged on the base part which can be moved. In other words, the monitor device is independent physically. With the mechanism, it is possible to lift up the monitor device together with the base part, to move them onto a carriage means like a cart, and to move or transport them to any desired location with the carriage means, for example. When the monitor device arrives at the desired location, it is possible to readily work or operate the monitor device there.

With the arrangement that the base part is movable, the following advantages or merits are realized. That is, the location at which a monitor device of the monitoring system is set in a place or field to be monitored is not limited substantially, in which no special setting work (or installation work) of the monitor device is required, and in which the location of the monitor device can be freely changed, when he/she desires to change it. In addition, since no special setting work (or no special installation work) of the monitor unit is required, or since there is no need of making holes on the wall for wiring of electric cables, etc. for example, any possible damage and/or scratches on the structure to which the monitor device is arranged is/are avoided significantly. In addition, depending upon the increase and decrease in number of the target objects to be monitored, it is possible to increase and decrease the number of locations for installation of the monitor device(s).

Also, with the mechanism, the monitor unit of the monitoring system can be set, only when it is necessary to employ the monitor unit thereof by arranging it at any desired location, so that the efficiency of use of the monitor device (therefore, of use of the monitoring system) can be enhanced. In addition, for example, after employing the monitor device, it can be moved to a warehouse, storehouse, etc. for security. Therefore, with the mechanism, the crime can be prevented significantly.

In the mechanism, the image, taken by the photographing device, of the at least one object in the monitoring region, is converted to the image signal by the image converter. The image signal is transmitted to the image server being connected to the Internet, by radio (or by wireless), by the monitor-side receiving and transmitting device. The image signal, received by the image server, is converted to the image data by the data converter of the image server, and the image data is recorded, or stored, by the recorder of the image server. The image data is transmitted to the portable terminal device being connected to the Internet by radio. The image data thus transmitted by radio, is received by the portable-side receiving and transmitting device of the portable terminal device, and then the image data is converted into the image which is displayed, or shown, on the image display device of the portable terminal device as a visual image of the at least one object locating in the monitoring region.

That is, according to the mechanism, the observer who is far away from the monitoring region, or who is in the vicinity thereof, can monitor (watch or observe) the at least one object in the monitoring region, when he/she desires to monitor it, by using the portable terminal device. For example, the at least one object may be an event participant in an event. The observer can know how many event participants gather in the event, and/or he/she can know if there is any suspicious person in the event or not, by monitoring the event participants on the image display device thereof.

As aforementioned, in the monitoring system, the monitoring region can be an event place (event site or event hall), and the at least one object can be the at least one participant locating in the event place, for example.

The event may be the one which is held constantly or regularly, or may be the one which is held temporarily or irregularly.

Generally, when such an event is held, many people gather in the event place; on the contrary, when the event is not held, there are few people there. This is because any event is normally held irregularly or casually. As such events, for example, there are sports competitions including soccer and baseball, gamblings including bicycle race (or bike race) and horse racing, concerts, festivals, fireworks displays, exhibitions (expositions), bargain sales, and so on. The terminology of the "object" locating in the monitoring region, includes a concept of not only such an event participant, or a natural person, but also a vehicle such as an automobile, a motorcycle, a bicycle, or the like, driven by the event participant, etc.

As an electric generator which generates electricity on the basis of natural energy, it is possible to employ an electric generator making use of wind power, geothermal energy, etc. From a view point of a cost of installation of the electric generator, of a location (or place) for the installation thereof, and of efficiency of generation of electricity, it is preferable to employ a solar battery (constituted by at least one solar cell) as the electric generator. Alternatively, as the electric power source, a hybrid generator which employs the solar energy and/or the wind power, for example, can be employed.

The object(s) to be monitored in such an event place may be monitored irregularly, temporarily, or casually. In other words, there is no need of monitoring such object(s) always, or twenty-four hours every day throughout one year. Meanwhile, a lot of electric energy is consumed in order to operate the photographing device of the monitor device. Therefore, it is preferable that the operation to take the image of the at least one object executed by the photographing device is performed periodically (for example, several hours everyday, a few days throughout in one week, or several days in a month, etc) by a program stored on the controller of the monitor device, or that the operation to take the image of the at least one object executed by the photographing device is performed on a basis of the control signal which is transmitted from the portable terminal device.

It is preferable that the base part comprises a carrier for moving the monitor device.

With the mechanism, it is easy to move the monitor device.

It is preferable that the photographing device of the monitor device is placed at a high location commanding a good view of the at least one object in the monitoring region.

It is preferable that the monitor device comprises a supporter for supporting the photographing device at the high location, and that the supporter is a rod-shaped elongate member which has one of a multi-step-connection structure and a multi-step-expansion-and-contraction structure.

With the mechanism, the supporter can be shortened, so that the carriage (or transportation), and/or the storage, of the monitor device is facilitated.

It is preferable that the photographing device of the monitor device has a shaking device for shaking an optical system thereof, and has a zooming function to zoom a lens in the optical system.

With the mechanism, the photographing device can survey, or look around, the monitoring region over a wider range of angle, and the photographing device can observe or watch the at least one object locating the monitoring region in more detail.

The target object(s) to be monitored by the monitor device is/are not limited to the event participant(s). The target object(s) can be the growth of agricultural crops raised in any cultivated land, natural phenomena such as a flooding of a river, an avalanche in the mountain, or the like.

In accomplishing the aforementioned objects of the present invention, according to still another aspect thereof, there is provided a monitoring system for monitoring at least one target object which locates in a monitor place to be monitored, comprising: a monitor device for monitoring the at least one target object, in which the monitor device is set in the monitor place; an image server for receiving data upon an image of the at least one target object, for storing the data, and for transmitting the data; and a portable terminal device having a display device for displaying the at least one target object, in which a user of the portable terminal device can monitor the at least one target object on the display device, **characterized in that** the monitor device, the image server and the portable terminal device are connected to internet by radio, wherein the monitor device has an electric power source which comprises a generator for generating electricity on a basis of natural energy and a secondary battery charged by the electricity, in which the monitor device is driven by the electricity, wherein the portable terminal device has a battery, in which the portable terminal device is driven by electricity of the battery, and wherein the data upon the image of the at least one target object is transmitted and received by radio.

These and other objects and features of the present invention will become clear from the following description taken in conjunction with the preferred embodiments thereof with reference to the accompanying drawings.

Fig. 1 is a general view of a monitoring system for monitoring the state of crop growth, according to a first embodiment of the present invention.

Fig. 2 is a block diagram of the monitoring system of Fig. 1.

Fig. 3 is a flowchart showing a series of steps of operations which a monitor unit, as a monitor device, of the monitoring system according to each of the first embodiment and a second embodiment performs.

Fig. 4 is a flowchart showing a series of steps of operations which an image server of the monitoring system according to each of the first embodiment and the second embodiment performs.

Fig. 5 is a flowchart showing a series of steps of operations which a portable terminal equipment of the monitoring system according to each of the first embodiment and the second embodiment performs.

Fig. 6 is a flowchart, according to a modification to that of each of the first embodiment and the second embodiment, showing a series of steps of operations which the monitoring system performs.

Fig. 7 is a general view of a monitoring system for monitoring an event, according to the second embodiment of the present invention.

Fig. 8 is a block diagram of the monitoring system of Fig. 7.

Fig. 9 is a general view of the monitoring system, according to a modification to the second embodiment.

Before a description of preferred embodiments of the present invention proceeds, it is to be noted that like or corresponding parts are designated by like reference numerals throughout the accompanying drawings.

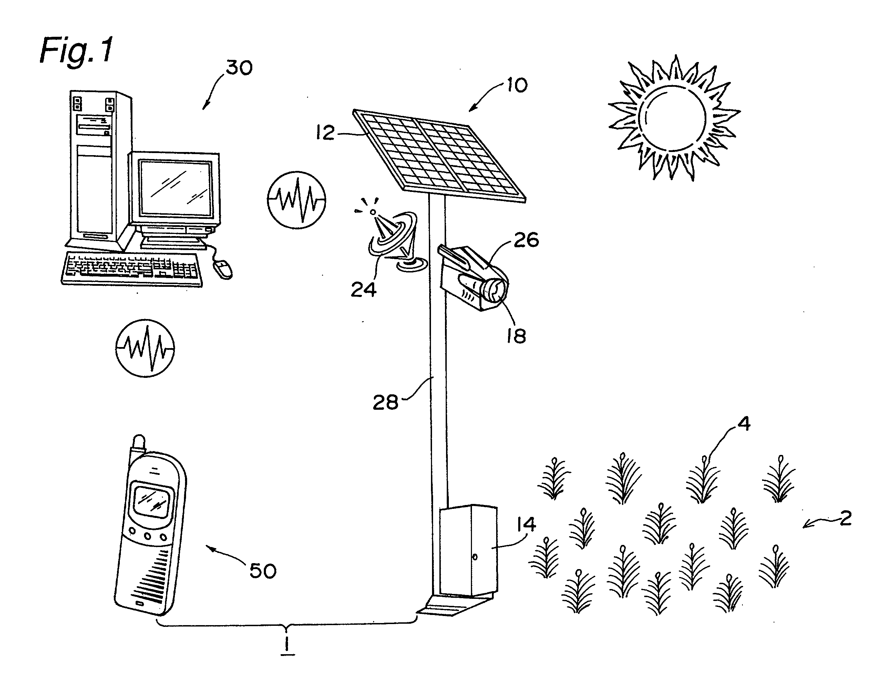

With reference to Figs. 1 through 9, a description is made below on a monitoring system, according to each of a first embodiment and a second embodiment of the present invention.

First, with reference to Figs. 1 through 5, it is explained about the monitoring system according to the first embodiment of the present invention.

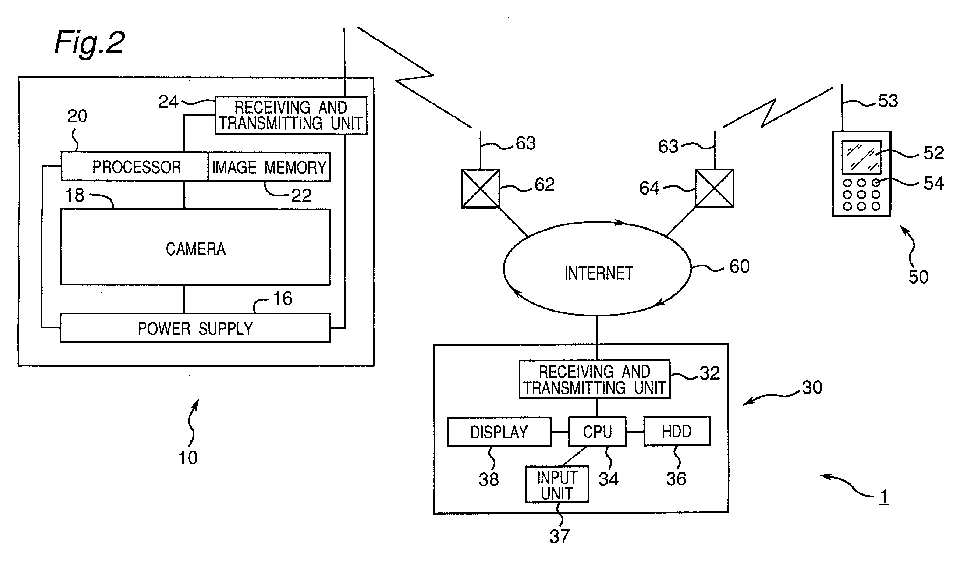

That is, as shown in Figs. 1 and 2, the monitoring system 1 is constructed for monitoring the state of crop growth. More specifically, the monitoring system 1 has a monitor unit 10 as a monitor device, an image server 30, a portable terminal equipment 50 as a portable terminal device, radio base stations 62, 64, and the Internet 60.

As shown in the figures, the monitor unit 10 has an electric power source 16 which includes a solar battery (or solar cells) 12 and a storage battery (accumulator) 14, a housing 26, a digital camera 18 which is accommodated inside the housing 26, and a pole or post 28 which supports both of the solar battery 12 and the housing 26 including the digital camera 18.

The housing 26 is formed as a waterproof housing; and the housing 26 accommodates the digital camera 18, a processor 20 and an image memory 22. The monitor unit 10 is installed, or mounted, in the fields 2 as a cultivated land of crops, where the crops to be monitored by the monitor unit 10 are raised or growing.

The fields 2 are far away from a house, or a place of residence, of a monitor (or user) who executes a remote control of the monitor unit 10 in the fields 2, and the fields 2 locate in such a remote place where there is no electric power source or supply, like in the form of an electric cable or wire, to the monitor unit 10, because the monitor unit 10 is far away from the human habitation.

The post 28 has a height of about 2-10 meters. The solar battery 12 locates at a top part of the post 28; the digital camera 18 housed inside the housing 26 locates at an upper part of the post 28; and the storage battery 14 locates at a lower part of the post 28. That is, the digital camera 18 is positioned, or arranged, at a high location of the post 28 at which the digital camera 18 commands a good view of the whole fields 2 where the crops 4, such as rice, vegetables, fruits, etc. to be monitored by the monitor unit 10, are growing.

The solar battery 12 of the electric power source 16 is a generator (or electric generator) converting the sunlight illuminated, or irradiated, on an outer surface of a panel of the solar battery 12 in the daytime into electric energy. On the other hand, the storage battery 14 is a secondary battery (or rechargeable battery) which stores, or accumulates, the electric energy generated by the solar battery 12. With the arrangement, the electric energy is supplied to all of the electric devices and components accommodated inside the monitor unit 10 from the power source 16, no matter whether it is daytime or nighttime.

The digital camera 18, as a photographing device, can take a photograph of at least a stationary image (still image or still picture). The digital camera 18 has a photographing optical system including a CCD (i.e. Charge Coupled Device) image taking element and a zoom lens, etc., and has a shaking mechanism which allows the photographing optical system to shake up and down and/or right and left at a wider range of angle, for example at a range of 90 degrees in a direction of up and down and at a range of 360 degrees in a direction of right and left.

The digital camera 18 mounted on the upper part of the post 28, generally, is oriented downward in order to monitor the crops 4 planted, or raised, in the fields 2. As explained above, the digital camera 18 is housed inside the water-proof housing 26, so that the digital camera 18 is protected against rain and wind in the fields 2.

The processor 20 has a CPU for controlling all of the electric and electronic elements, or components, included in the monitor unit 10, and has a ROM storing programs for executing all the operations and functions thereof. More specifically, the CPU performs an operation to take a photograph of the crops 4, performs an operation to convert an image data into an image signal or to convert the image signal into the image data (i.e. performs an image conversion process), and/or performs a data communication process etc., in accordance with the programs stored on the ROM.

The image memory 22 can be any one(s) of various types of recording media, such as a magnetic recording medium, a magnetic-optical recording medium, and/or a RAM for temporarily storing data upon a stationary image (i.e. data upon a still image, or data upon a fixed image) taken by the digital camera 18.

In the monitor unit 10, a general operation to take photographs, an operation to shake the photographing optical system and/or a zooming operation of the zoom lens, etc., are performed in accordance with programs stored on the ROM, regularly (for example, every several hours, every half a day, every day, etc.) and automatically. Alternatively, the general operation to take photographs, the operation to shake the photographing optical system and/or the zooming operation of the zoom lens, can be performed, on the basis of individual and specific instructions from the portable terminal equipment 50.

The receiving and transmitting unit 24 on the side of the monitor unit 10 is employed for the purpose of connecting to the radio communication network (or wireless communication network) for a portable telephone (or cellular phone), PHS, etc. As examples of such radio communication networks, there are i-mode provided by NTTDoCoMo Company, EZweb provided by au Company, J-sky provided by J-PHONE Company, dot i provided by Astel Company, and so on. The receiving and transmitting unit 24 employs the communication protocol which is generally employed for the portable telephone, PHS, and so on.

Each of the radio base stations 62, 64 has a receiving and transmitting unit 63 arranged on the side of a base station, for receiving and transmitting image signals with respect to the image server 30, for receiving and transmitting the image signals of image taken (or photographed) by radio with respect to the receiving and transmitting unit 24 on the side of the monitor unit 10 and with respect to the receiving and transmitting unit 53 on the side of portable terminal equipment 50, and for receiving and transmitting control signals sent (or transmitted) from the portable terminal equipment 50 by radio.

There are arranged a plurality of the radio base stations 62, 64 which are studded, or dotted, so as to form a covering area in which it is possible for the user (or remote monitor) of the portable terminal equipment 50 to communicate with any one of the nearest radio base station 62, 64, no matter where the user is.

More specifically, under a situation in which the portable phone is used for example, the radio base stations 62, 64 are arranged at every area with a radius of approximately 500 meters. Meanwhile, under a situation in which the PHS is used for example, the radio base stations 62, 64 are arranged at every area with a radius of approximately 100 meters. Accordingly, under such an arrangement, not only the image signals of image taken (or photographed) can be transmitted from the monitor unit 10 by radio, but also the control signals from the portable terminal equipment 50 can be received by the monitor unit 10 by radio, with respect to the radio base stations 62, 64 which locate away from the monitor unit 10.

As explained above, the area which one radio base station for the PHS can cover to communicate with the PHS, is smaller than the area which one radio base station for the portable telephone can cover to communicate with the portable telephone. Therefore, if the radio base station for the PHS does not locate near the fields 2, it may not be possible to communicate between the radio base station and the PHS. From the viewpoint thereof, it is preferable that the radio base station is the one for the portable telephone, and that the portable terminal equipment is the portable telephone.

Even if the radio base stations 62, 64 are far apart from each other, the actual distance therebetween does not bring any problem, because the radio base stations 62, 64 are connected to each other via the Internet.

The image server 30 can be positioned at any desired place where the image server 30 can be connected to the Internet 60 via wire or wireless. Generally, the image server 30 can locate at any desired place far from the fields 2, in which place the electric power is supplied to the image server 30 stably. The image server 30 may be administered or controlled by the remote monitor or user himself/herself, or by a server administrator as a business or profession.

The image server 30 has a receiving and transmitting unit 32, a CPU 34, a HDD 36 with a big capacity on which any data upon image (s) taken or photographed can be stored or recorded, a display device 38, and an input unit 37 including a keyboard, a mouse, and so on.

The receiving and transmitting unit 32 on the side of the image server 30 is the unit for receiving and transmitting image signals with respect to the radio base stations 62, 64. The CPU 34 controls an operation of the whole image server 30. More specifically, the CPU 34 executes a communication process in the receiving and transmitting unit 32 on the side of the image server 30, a signal process for converting the image data into the image signals and the latter into the former, a number granting process (number vesting process or number giving process) with respect to image data, a storing process for storing the image data on the HDD 36, and a thumbnail image process of the image data, etc.

The portable terminal equipment 50 is owned by the remote monitor (or remote user) who resides or lives far away from the fields 2 and who monitors the same fields 2. The portable terminal equipment 50 communicates with the radio base stations 62, 64 by radio, in which the radio base stations 62, 64 are connected to the radio communication network which is formed by the Internet 60.

The electric power source employed by the portable terminal equipment 50 is a battery housed therein which can be a primary battery and/or a secondary battery. As explained above, the portable terminal equipment 50 is the portable telephone, or the PHS. The PHS can be used as the portable terminal equipment 50. However, since the area in which the PHS can communicate with the radio base station is smaller than that in which the portable telephone can communicate with the radio base station. Therefore, as the portable terminal equipment, it is preferable to employ the portable telephone.

On the other hand, the portable terminal equipment 50 has a receiving and transmitting unit 53, a CPU, a memory for temporarily storing image data, a display device 52, and operational buttons 54 as an input unit (or input device).

The receiving and transmitting unit 53 on the side of the portable terminal equipment 50, is the unit not only for receiving the image signal(s) from the receiving and transmitting unit 63 arranged on the side of the radio base station 64 by radio in which the image signal(s) come(s) from the image server 30, but also for transmitting (or sending) the control signal(s) to the receiving and transmitting unit 63 arranged on the side thereof by radio.

The CPU controls an operation of the whole portable terminal equipment 50. More specifically, the CPU executes a communication process in the receiving and transmitting unit 53 on the side of the portable terminal equipment 50, a signal process for converting the image data into the image signals and the latter into the former, a data sorting-out process (or data arrangement process) for displaying image(s) taken, or photographed, of the crops 4 in the form of a list, etc. The remote monitor pushes down the operational button(s) 54 of the portable terminal equipment 50 in order to give the instructions to photograph the crops 4 in the fields 2 and/or to receive and transmit the image(s) photographed.

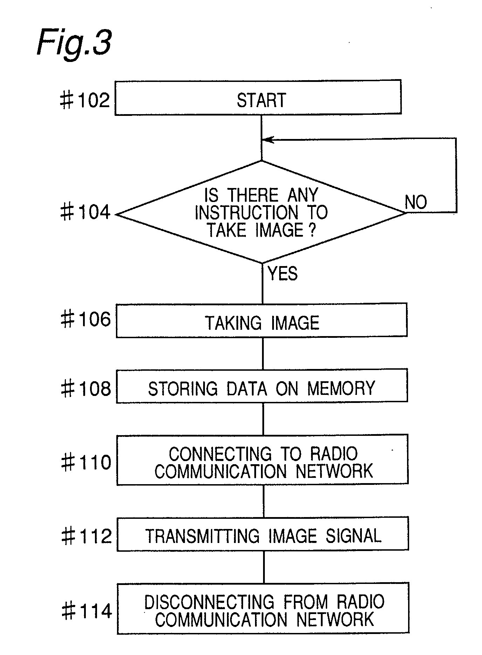

Hereinafter, with reference to Figs. 3 through 5, it is explained below about a case in which a general operation to photograph the crops 4, to shake the photographing optical system, and to zoom the zoom lens therein, is executed regularly (or periodically) and automatically on the basis of the built-in programs, in the monitoring system 1 for monitoring the state of growth of crops.

That is, with reference to Fig. 3, when the monitor (watch or observation) of a state of growth of the crops 4 raised in the fields 2 is started at step #102, it is determined whether or not the user gives the instructions to take an image of the crops at step #104. If there is no instructions to take the image thereof, time is waited for at the same step. Meanwhile, when a predetermined time which is appointed (or designated) for taking the image thereof by the built-in programs itself comes, the instructions to take the image thereof are given, and the operation to take the photograph of the crops 4 is executed at step #106.

After the image taken of the crops 4 is converted into image data, the image data is stored on the image memory 22 temporarily at step #108. When a predetermined time (for example, at midnight when the communication cost is relatively low) of transmission which is appointed (or designated) by the built-in programs comes, the receiving and transmitting unit 24 on the side of the monitor unit 10 is connected to the radio communication network (wireless communication network) which is connected to the Internet at step #110. Then, the receiving and transmitting unit 24 on the side of the monitor unit 10 communicates with the receiving and transmitting unit 63 on the side of the radio base station 62 by radio, so that the image signal(s) converted from the image data is/are transmitted from the side of the monitor unit 10 to the side of the radio base station 62 at step #112.

Immediately after the image signal(s) is/are transmitted, the connection to the radio communication network is cut at step #114. Then, the image signals which have been received by the radio base station 62, are transmitted to the image server 30 through the Internet 60.

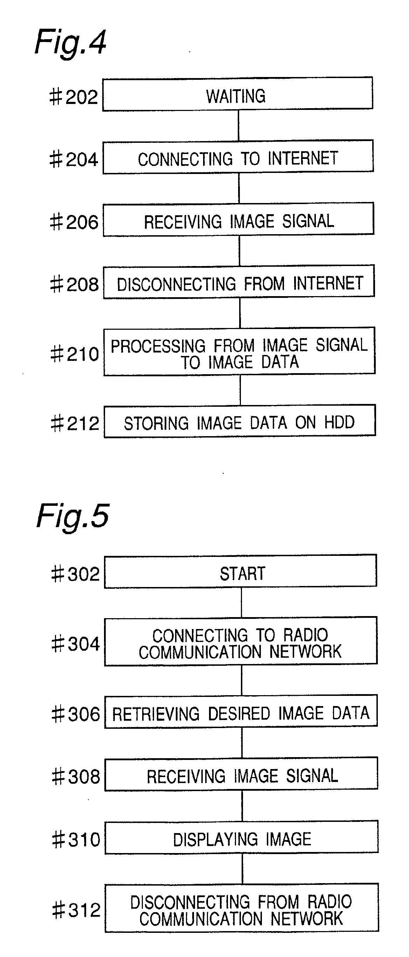

On the other hand, as shown in Fig. 4, the image server 30 which is in a state of standing by (or in a state of waiting) at step #202, is connected to the Internet 60 automatically at step #204, when a predetermined time for reception (i.e. for receiving the image signals) comes. The predetermined time is set, or designated, by the built-in programs in the image server 30, and the predetermined time is before, or prior to, the time when the monitor unit 10 transmits, or sends, the image signals.

When the image server 30 receives the image signals at step #206, the connection of the image server 30 to the Internet 60 is cut, or disconnected, at step #208. The image signal(s) thus received thereby, is/are processed into image data (or data upon image) by the CPU 34 at step #210; and photographing condition data (or data upon a condition of taking a photograph) about a particular date when the photo is taken is added to the image data, and the image data to which the photographing condition data is added is stored on the HDD 36 at step #212. Incidentally, the image server 30 may be always connected to the Internet 60 twenty-four hours continuously.

Meanwhile, as shown in Fig. 5, when the remote monitor turns on the power switch of the portable terminal equipment 50 in order to monitor, or watch, the crops 4 in the fields 2 at step #302, the receiving and transmitting unit 53 on the side of the portable terminal equipment 50 is connected to the radio communication network being connected to the Internet 60 at step #304. Then, the receiving and transmitting unit 53 on the side of the portable terminal equipment 50 communicates with the receiving and transmitting unit 63 on the side of the radio base station 64, so that a demand signal for demanding (or requiring) the transmission of the photographing condition data which is stored on the HDD 36 of the image server 30 is transmitted, and so that the photographing condition data stored thereon is transmitted. Namely, the photographing condition data is received by the receiving and transmitting unit 53 on the side of the portable terminal equipment 50, via the Internet 60 and via the receiving and transmitting unit 63 on the side of the radio base station 64. Then, a desired image data is retrieved and selected, by the remote user, from all the photographing condition data thus having been received, at step #306.

Then, the receiving and transmitting unit 53 on the side of the portable terminal equipment 50 communicates with the receiving and transmitting unit 63 on the side of the radio base station 64 so that a demand signal for demanding (or requiring) the transmission of a desired image data is transmitted. Then, according to the demand signal, the image signal(s), corresponding to the desired image data, stored on the HDD 36 of the image server 30, is/are transmitted. The desired image signal(s) is/are received by the receiving and transmitting unit 53 on the side of the portable terminal equipment 50, via the Internet 60 and via the receiving and transmitting unit 63 on the side of the radio base station 64 at step #308.

Then, the image thus received, is displayed on the display device 52 of the portable terminal equipment 50 at step #310. When a series of operations are finished, the connection of the portable terminal equipment 50 to the radio communication network is cut, or disconnected, at step #312.

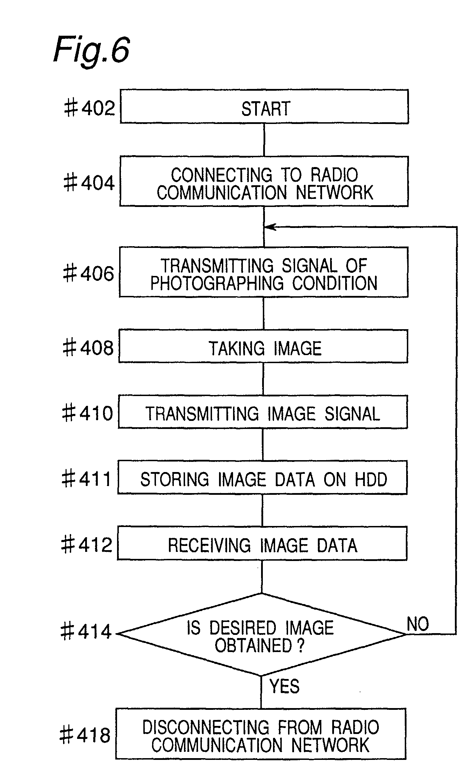

Next, with reference to Fig. 6 which shows a flowchart according to the modification to that of the first embodiment, it is explained about a case in which a real-time operation to photograph the crops 4, to shake the photographing optical system, and to zoom the zoom lens therein, is executed on the basis of the instructions from the portable terminal equipment 50, in the monitoring system for monitoring the state of growth of crops.

That is, as shown in Fig. 6, when the remote user turns on the power switch of the portable terminal equipment 50 at step #402, the receiving and transmitting unit 53 on the side of the portable terminal equipment 50 is connected to the radio communication network at step #404. Then, the remote user operates the portable terminal equipment 50 by pushing the operational button(s) 54, in order to give the instructions to make the monitor unit 10 take a photograph of the crops 4 in the fields 2. The instructions can include the ones to make the photographing optical system be shaken and/or to make it zoom the zoom lens therein. Then, the receiving and transmitting unit 53 on the side of the portable terminal equipment 50, communicates with the receiving and transmitting unit 63 on the side of the radio base station 64, so that signal(s) upon photographing condition (or photographing condition signal(s)) is/are transmitted at step #406. Then, the digital camera 18 of the monitor unit 10 takes a photograph (i.e. photographs the crops 4 in the fields 2) in accordance with the signal(s) upon the photographing condition, at step #408.

When the photographing operation ends, the image thus having being taken is converted into the image signal(s), and the image signal(s) is/are transmitted by radio from the receiving and transmitting unit 24 on the side of the monitor unit 10 to the receiving and transmitting unit 63 on the side of the radio base station 62 at step #410. The image signal(s) thus transmitted by radio, is/are stored, as image data, on the HDD 36 of the image server 30, via the radio base station 62, the Internet 60, and the receiving and transmitting unit 32 of the image server 30, at step #411, in the same way as that explained above.

The image data thus stored thereon, is received by the receiving and transmitting unit 53 on the side of the portable terminal equipment 50 via the receiving and transmitting unit 32 on the side of image server 30, via the Internet 60, and via the radio base station 64, in the form of image signal(s), at step #412.

The image signal(s) thus received, is/are converted into image data, and then the image(s) of the crops 4 having been taken by the digital camera 18 of the monitor unit 10 is/are displayed on the display device 52 of the portable terminal equipment 50.

Then, the remote user determines, or decides, whether his/her desired image(s) has/have been got or not by watching the image(s) which is/are displayed on the display device 52 at step #414. If he/she determines that the desired image(s) has/have not been got, different instructions with another photographing condition (for example, instructions to make the digital camera 18 be shaken 90 degrees leftward) are given. On the other hand, if he/she determines that the desired image(s) has/have been got, the connection of the portable terminal equipment 50 to the radio communication network is cut at step #418, and a series of the operations are finished.

Next, with reference to Figs. 3, 4, 5, 7 and 8, it is explained about the monitoring system according to the second embodiment of the present invention.

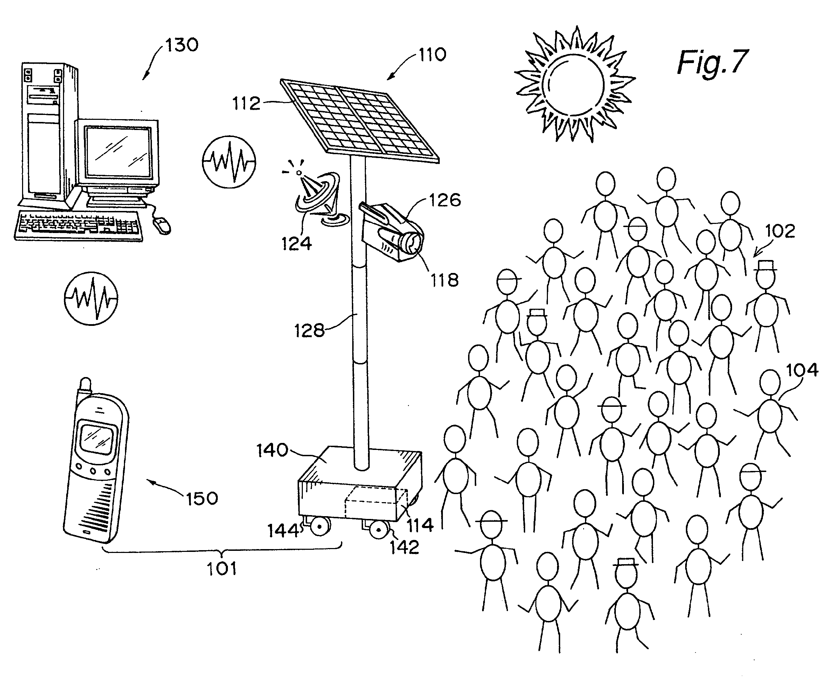

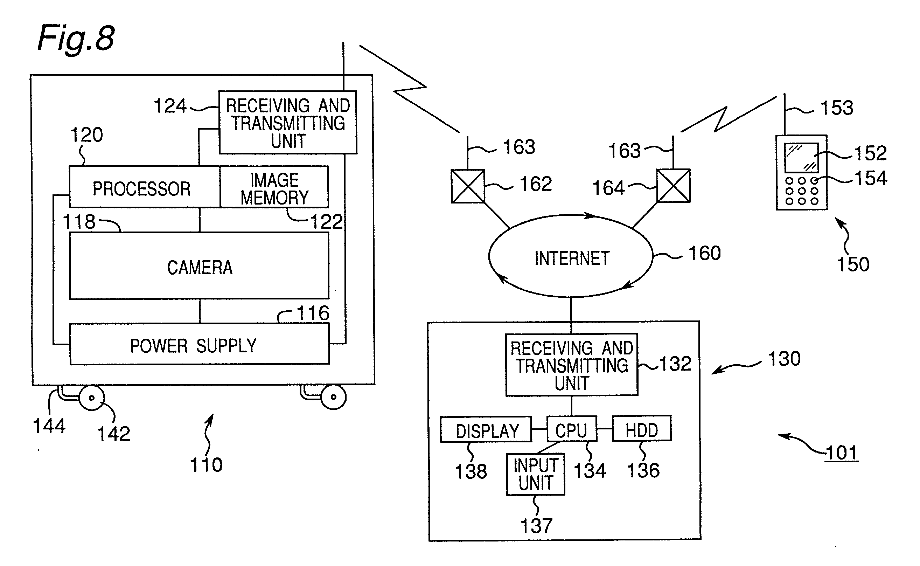

As shown in Figs. 7 and 8, the monitoring system 101 is constructed for monitoring an event, which is different from the object that the monitoring system according to the first embodiment targets to monitor.

More specifically, the place (area, field, site or region) 102 which the monitoring system 101 targets to monitor (watch or observe), is such a place as that where an event is held. Generally, in such a place, when the event is held, many people gather; on the other hand, when the event is not held, there are few people there. This is because any event is normally held irregularly or casually. As such events, for example, there are sports competitions including soccer and baseball, gamblings including bicycle race (or bike race) and horse racings, concerts, festivals, fireworks displays, exhibitions (expositions), bargain sales, and so on.

Hereinafter, the place 102 where the event is held, is also referred to as an "event place". This terminology of "event place" includes not only a concept of the event grounds 102 themselves, but also a concept of a wider region surrounding the event grounds 102 and a concept of a distance or a route between the event grounds 102 and any nearest railway station (or bus stop).

The monitoring system 101 monitors (watches or observes) a state of whether many people 104 gather or not in the event place 102, a state of whether any doubtful person or people is/are there or not, for instance.

Also, hereinafter, those people 104 gathering in the event place 102, who are the objects to be monitored by the monitoring system 101, are also referred to as "event participants". This terminology of "event participants" 104 includes not only a concept of people themselves who try going to the event place 102 or who have already gathered in the event place 102, but also a concept of vehicles, such as motor bikes, bicycles, cars, trucks and the like, which try going to the event place 102 or which have already gathered in the event place 102.

As shown in Figs. 7 and 8, the monitoring system 101 has a monitor unit 110, an image server 130, a portable terminal equipment 150, radio base stations 162, 164, and the Internet 160.

As shown in the figures, the monitor unit 110 has an electric power source 116 which includes a solar battery (or solar cells) 112 and a secondary battery (or rechargeable battery) 114, a housing 126, a digital camera 118 which is accommodated inside the housing 126, a pole or post 128 which supports both of the solar battery 112 and the housing 126 including the digital camera 118, and a base part 140 to which the pole 128 is fixed. The secondary battery 114 is housed inside the base part 140. At least one monitoring system 110 is put or arranged on at least one location in an event place 102 as a place to be monitored where event participants 104 as objects to be monitored get together.

The housing 126 is formed as a waterproof housing; and the housing 126 accommodates the digital camera 118, a processor 120 and an image memory 122.

The solar battery 112 locates at a top part of the post 128; the digital camera 118 housed inside the housing 126 locates at an upper part of the post 128; and the secondary battery 114 is housed inside the base part 140 as shown by a dotted line in Fig. 7, as aforementioned. That is, the digital camera 118 is positioned, or arranged, at a high location of the post 128 at which the digital camera 118 commands a good view of the event participants 102 who gather on the event place 102.

The post 128, in a form of an elongate rod, for supporting the digital camera 118, as a photographing means, at the high location, has a height of about 2-10 meters. The post 128 can be made of a single pipe, of a plurality of pipes, or of a plurality of short separate pipes which are connected to each other in such a way that an end of one pipe thereof is engaged with, or screwed into, an end of one adjacent pipe with a multi-step-connection structure as a whole.

The post 128 shown in Fig. 7 is made of the plurality of short separate pipes being connected to each other with the plural-steps-connecting-structure. More specifically, the post 128 is made of three short separate pipes being connected to each other. Each of the separate pipes has a length of about two meters for example. For example, an end of a short pipe has a male screw, and an adjacent end of an adjacent short pipe has a female screw, in which the male screw and the female screw are screwed with each other so that the two short pipes are fixed to each other. In such a manner, all of the three short pipes are connected (i.e. fixed) to each other into forming one single long post 128 as shown in the figure. With the plural-steps-connecting-structure, it is easy to store and/or carry the post 128.

As explained above, the secondary battery 114 is housed inside the base 140 which is box-shaped. The post 128 is fixed to the base 140 so that the former is perpendicular to an upper surface of the latter. As shown in Fig. 7, two pairs of wheels 142, as means for moving (or carrying) the base 140, are mounted, or arranged, under the base 140. With the arrangement, the monitor unit 110 can be moved to any desired place or location.

The base part 140 has a wheel stopper for stopping rotation of the wheels 142, for the purpose of preventing any unprepared or careless movement of the base part 140 relative to the ground. The base part 140 functions as a carrier of the monitor unit 110. Therefore, the monitor unit 110 can be moved to any desired place or location, when necessary, by pushing the monitor unit 110 manually for example.

The solar battery 112 of the electric power source 116 is a generator (or electric generator) converting the sunlight illuminated, or irradiated, on an outer surface of a panel of the solar battery 112 in the daytime into electric energy. On the other hand, the battery 114 is the secondary battery (or rechargeable battery) which stores, or accumulates, the electric energy generated by the solar battery 112, and which can discharge electricity. For example, as the secondary battery, a lead storage battery, a nickel-cadmium battery, a nickel-hydrogen battery, or a lithium-ion battery, can be employed. The lead storage battery is a relatively heavier battery. Employing the lead storage battery as the secondary battery 114 in the monitor unit 110, and arranging the battery 114 inside the base part 140 which locates at a bottom part of the monitor unit 110, the center of gravity of the monitor unit 110 is at a lower position thereof. With this arrangement, the stability in posture of the monitor unit 110 is enhanced, and the electric energy is supplied to all of the electric devices and components of the monitor unit 110 from the power source 116, no matter whether it is daytime or nighttime.

The digital camera 118, as a photographing means, can take a photograph of at least a stationary image (still image or still picture). The digital camera 118 has a photographing optical system including a CCD (i.e. Charge Coupled Device) image taking element and a zoom lens, etc., and has a shaking mechanism which allows the photographing optical system to shake up and down and/or right and left at a wider range of angle, for example at a range of 90 degrees in a direction of up and down and at a range of 360 degrees in a direction of right and left.

The digital camera 118 mounted on the upper part of the post 128, for example, is oriented downward in order to monitor the event participants 104 who gather in the event place 102. As explained above, the digital camera 118 is housed inside the water-proof housing 126, so that the digital camera 118 is protected against rain and wind.

The processor 120 has a CPU for controlling all of the electric and electronic elements, or components, included in the monitor unit 110, and has a ROM storing programs for executing all the operations and functions thereof. More specifically, the CPU performs an operation to take a photograph of the event participants 104, performs an operation to convert an image data into an image signal or to convert the image signal into the image data (i.e. performs an image conversion process), and/or performs a data communication process etc., in accordance with the programs stored on the ROM.

The image memory 122 can be any one(s) of various types of recording media, such as a magnetic recording medium, a magnetic-optical recording medium, and/or a RAM for temporarily storing data upon a stationary image (i.e. data upon a still image, or data upon a fixed image) taken by the digital camera 118.

In the monitor unit 110, a general operation to take photographs, an operation to shake the photographing optical system and/or a zooming operation of the zoom lens, etc., are performed in accordance with programs stored on the ROM, regularly (for example, every several hours in a day, every two or three days in a week, every four or five days in a month, etc.) and automatically. Alternatively, the general operation to take photographs, the operation to shake the photographing optical system and/or the zooming operation of the zoom lens, can be performed, on the basis of individual and specific instructions from the portable terminal equipment 150.

The receiving and transmitting unit 124 on the side of the monitor unit 110 is employed for the purpose of connecting to the radio communication network (or wireless communication network) for a portable telephone (or cellular phone), PHS, etc. As examples of such radio communication networks, there are i-mode provided by NTTDoCoMo Company, ezmovie or EZweb provided by KDDI Company, J-sky provided by J-PHONE Company, dot i provided by Astel Company, and so on. The receiving and transmitting unit 124 employs the communication protocol which is generally employed for the portable telephone, PHS, and so on.

Each of the radio base stations 162, 164 has a receiving and transmitting unit 163 arranged on the side of a base station, for receiving and transmitting image signals with respect to the image server 130, for receiving and transmitting the image signals of image taken (or photographed) by radio with respect to the receiving and transmitting unit 124 on the side of the monitor unit 110 and with respect to the receiving and transmitting unit 153 on the side of portable terminal equipment 150, and for receiving and transmitting control signals sent (or transmitted) from the portable terminal equipment 150 by radio.

There are arranged a plurality of the radio base stations 162, 164 which are studded, or dotted, so as to form a covering area in which it is possible for the user (or monitor) of the portable terminal equipment 150 to communicate with any one of the nearest radio base station 162, 164, no matter where the monitor is.

More specifically, under a situation in which the portable phone is used for example, the radio base stations 162, 164 are arranged at every area with a radius of approximately 500 meters. Meanwhile, under a situation in which the PHS is used for example, the radio base stations 162, 164 are arranged at every area with a radius of approximately 100 meters. Accordingly, under such an arrangement, not only the image signals of image taken (or photographed) can be transmitted from the monitor unit 110 by radio, but also the control signals from the portable terminal equipment 150 can be received by the monitor unit 110 by radio, with respect to the radio base stations 162, 164 which locate away from the monitor unit 110.

As explained above, the area which one radio base station for the PHS can cover to communicate with the PHS, is smaller than the area which one radio base station for the portable telephone can cover to communicate with the portable telephone. Therefore, if the radio base station for the PHS does not locate near the event place 102, it may not be possible to communicate between the radio base station and the PHS. From the viewpoint thereof, it is preferable that the radio base station is the one for the portable telephone, and that the portable terminal equipment is the portable telephone.

Even if the radio base stations 162, 164 are far apart from each other, the actual distance therebetween does not bring any problem, because the radio base stations 62, 64 are connected to each other via the Internet.

The image server 130 can be positioned at any desired place where the image server 130 can be connected to the Internet 160 via wire or wireless. Generally, the image server 130 can locate at any desired place far from the event place 102, in which place the electric power is supplied to the image server 130 stably. The image server 130 may be administered or controlled by the monitor or user himself/herself, or by a server administrator as a business or profession.

The image server 130 has a receiving and transmitting unit 132, a CPU 134, a HDD 136 with a big capacity on which any data upon image(s) taken or photographed can be stored or recorded, a display device 138, and an input unit 137 including a keyboard, a mouse, and so on.

The receiving and transmitting unit 132 on the side of the image server 130 is the unit for receiving and transmitting image signals with respect to the radio base stations 162, 164. The CPU 134 controls an operation of the whole image server 130. More specifically, the CPU 134 executes a communication process in the receiving and transmitting unit 132 on the side of the image server 130, a signal process for converting the image data into the image signals and the latter into the former, a number granting process (number vesting process or number giving process) with respect to image data, a storing process for storing the image data on the HDD 136, and a thumbnail image process of the image data, etc.

The portable terminal equipment 150 is owned by a monitor (or user) who is far away from the event place 102, or who is in the vicinity of the event place 102. The portable terminal equipment 150 communicates with the radio base stations 162, 164 by radio, in which the radio base stations 162, 164 are connected to the radio communication network which is formed by the Internet 160.

The electric power source employed by the portable terminal equipment 150 is a battery housed therein which can be a primary battery and/or a secondary battery. As explained above, the portable terminal equipment 150 is the portable telephone, or the PHS. The PHS can be used as the portable terminal equipment 150. However, since the area in which the PHS can communicate with the radio base station is smaller than that in which the portable telephone can communicate with the radio base station. Therefore, as the portable terminal equipment, it is preferable to employ the portable telephone.

On the other hand, the portable terminal equipment 150 has a receiving and transmitting unit 153, a CPU, a memory for temporarily storing image data, a display device 152, and operational buttons 154 as an input unit (or input device).

The receiving and transmitting unit 153 on the side of the portable terminal equipment 150, is the unit not only for receiving the image signal(s) from the receiving and transmitting unit 163 arranged on the side of the radio base station 164 by radio in which the image signal(s) come(s) from the image server 130, but also for transmitting (or sending) the control signal(s) to the receiving and transmitting unit 163 arranged on the side thereof by radio.

The CPU controls an operation of the whole portable terminal equipment 150. More specifically, the CPU executes a communication process in the receiving and transmitting unit 153 on the side of the portable terminal equipment 150, a signal process for converting the image data into the image signals and the latter into the former, a data sorting-out process (or data arrangement process) for displaying image(s) taken, or photographed, of the event participants 104 in the form of a list, etc. The user pushes down the operational button(s) 154 of the portable terminal equipment 150 in order to give the instructions to photograph the event participants 104 in the event place 102 and/or to receive and transmit the image(s) photographed.

Hereinafter, with reference to Figs. 3 through 5, it is explained below about a case in which a general operation to photograph the event participants 104 in the event place 102, to shake the photographing optical system, and to zoom the zoom lens therein, is executed regularly (or periodically) and automatically on the basis of the built-in programs, in the monitoring system 101 for monitoring the event.

That is, with reference to Fig. 3, when the monitor (watch or observation) of a state of the event participants 104 in the event place 102 is started at step #102, it is determined whether or not the user gives the instructions to take an image of the event participants 104 at step #104. If there is no instructions to take the image thereof, time is waited for at the same step. Meanwhile, when a predetermined time which is appointed (or designated) for taking the image thereof by the built-in programs itself comes, or when the instructions to take the image thereof are given, the operation to take the photograph of the event participants 104 is executed under a certain designated photographing condition, at step #106.

After the image taken of the event participants 104 is converted into image data, the image data is stored on the image memory 122 temporarily at step #108. And the receiving and transmitting unit 124 on the side of the monitor unit 110 is connected to the radio communication network (wireless communication network) which is connected to the Internet 160, simultaneously when the photographing operation is started, or while the photographing operation is being executed, or after the photographing operation has been accomplished, at step #110.

Then, the receiving and transmitting unit 124 on the side of the monitor unit 110 communicates with the receiving and transmitting unit 163 on the side of the radio base station 162 by radio, so that the image signal(s) converted from the image data is/are transmitted from the side of the monitor unit 110 to the side of the radio base station 162 at step #112.

Immediately after the image signal(s) is/are transmitted, the connection to the radio communication network is cut at step #114. Then, the image signals which have been received by the radio base station 162, are transmitted to the image server 130 through the Internet 160.

On the other hand, as shown in Fig. 4, when the instructions to receive the image of the event participants 104 are given, or when a predetermined time (a bit prior to the transmission of the image signals from the monitor system 110) to receive the image thereof which is designated or appointed by the built-in programs comes, the image server 130 which is in a state of standing by (or in a state of waiting) at step #202, is connected to the Internet 160 automatically at step #204.

When the image server 130 receives the image signals at step #206, the connection of the image server 130 to the Internet 160 is cut, or disconnected, at step #208. The image signal(s) thus received thereby, is/are processed into image data (or data upon image) by the CPU 134 at step #210; and photographing condition data (or data upon a condition of taking a photograph) about a particular date when the photo is taken is added to the image data, and the image data to which the photographing condition data is added is stored on the HDD 36 at step #212. Incidentally, the image server 130 may be always connected to the Internet 160 twenty-four hours continuously.

Meanwhile, as shown in Fig. 5, when the user turns on the power switch of the portable terminal equipment 150 in order to monitor, or watch, the event participants 104 in the event place 102 at step #302, the receiving and transmitting unit 153 on the side of the portable terminal equipment 150 is connected to the radio communication network being connected to the Internet 160 at step #304. Then, the receiving and transmitting unit 153 on the side of the portable terminal equipment 150 communicates with the receiving and transmitting unit 163 on the side of the radio base station 164, so that a demand signal for demanding (or requiring) the transmission of the photographing condition data which is stored on the HDD 136 of the image server 130 is transmitted, and so that the photographing condition data stored thereon is transmitted to the portable terminal equipment 150. Namely, the photographing condition data is received by the receiving and transmitting unit 153 on the side of the portable terminal equipment 150, via the Internet 160 and via the receiving and transmitting unit 163 on the side of the radio base station 164. Then, a desired image data is retrieved and selected, by the user, from all the photographing condition data thus having been received, at step #306.

Then, the receiving and transmitting unit 153 on the side of the portable terminal equipment 150 communicates with the receiving and transmitting unit 163 on the side of the radio base station 164 so that a demand signal for demanding (or requiring) the transmission of a desired image data is transmitted. Then, according to the demand signal, the image signal(s), corresponding to the desired image data, stored on the HDD 136 of the image server 130, is/are transmitted. The desired image signal(s) is/are received by the receiving and transmitting unit 153 on the side of the portable terminal equipment 150, via the Internet 160 and via the receiving and transmitting unit 163 on the side of the radio base station 164 at step #308.

Then, the image thus received, is displayed on the display device 152 of the portable terminal equipment 150 at step #310. When a series of operations are finished, the connection of the portable terminal equipment 150 to the radio communication network is cut, or disconnected, at step #312.

Next, with reference to Fig. 6 which shows the flowchart according to the modification to that of the second embodiment, it is explained about a case in which a real-time operation to photograph the event participants 104 in the event place 102, to shake the photographing optical system, and to zoom the zoom lens therein, is executed on the basis of the instructions from the portable terminal equipment 150, in the monitoring system for monitoring the event.

That is, as shown in Fig. 6, when the monitor (user) turns on the power switch of the portable terminal equipment 150 at step #402, the receiving and transmitting unit 153 on the side of the portable terminal equipment 150 is connected to the radio communication network at step #404. Then, the user operates the portable terminal equipment 150 by pushing the operational button(s) 154, in order to give the instructions to make the monitor unit 110 take a photograph of the event participants 104 there. The instructions can include the ones to make the digital camera 118 take a normal photograph, to make the photographing optical system be shaken and/or to make it zoom the zoom lens therein. Then, the receiving and transmitting unit 153 on the side of the portable terminal equipment 150, communicates with the receiving and transmitting unit 163 on the side of the radio base station 164, so that signal(s) upon photographing condition (or photographing condition signal(s)) is/are transmitted at step #406. Then, the digital camera 118 of the monitor unit 110 takes a photograph (i.e. photographs the event participants 104 in the event place 102) in accordance with the signal(s) upon the photographing condition, at step #408.

When the photographing operation ends, the image thus having being taken is converted into the image signal(s), and the image signal(s) is/are transmitted by radio from the receiving and transmitting unit 124 on the side of the monitor unit 110 to the receiving and transmitting unit 163 on the side of the radio base station 162 at step #410. The image signal(s) thus transmitted by radio, is/are stored, as image data, on the HDD 136 of the image server 130, via the radio base station 162, the Internet 160, and the receiving and transmitting unit 132 of the image server 130, at step #411, in the same way as that according the first embodiment.

The image data thus stored thereon, is received by the receiving and transmitting unit 153 on the side of the portable terminal equipment 150 via the receiving and transmitting unit 132 on the side of image server 130, via the Internet 160, and via the radio base station 164, in the form of image signal(s), at step #412.

The image signal(s) thus received, is/are converted into image data, and then the image(s) of the event participants 104 having been taken by the digital camera 118 of the monitor unit 110 is/are displayed on the display device 152 of the portable terminal equipment 150.

Then, the user determines, or decides, whether his/her desired image(s) has/have been got or not by watching the image(s) which is/are displayed on the display device 152 at step #414. If he/she determines that the desired image(s) has/have not been got, different instructions with another photographing condition (for example, instructions to make the digital camera 118 be shaken 90 degrees rightward) are given. On the other hand, if he/she determines that the desired image(s) has/have been got, the connection of the portable terminal equipment 150 to the radio communication network is cut at step #418, and a series of the operations are finished.

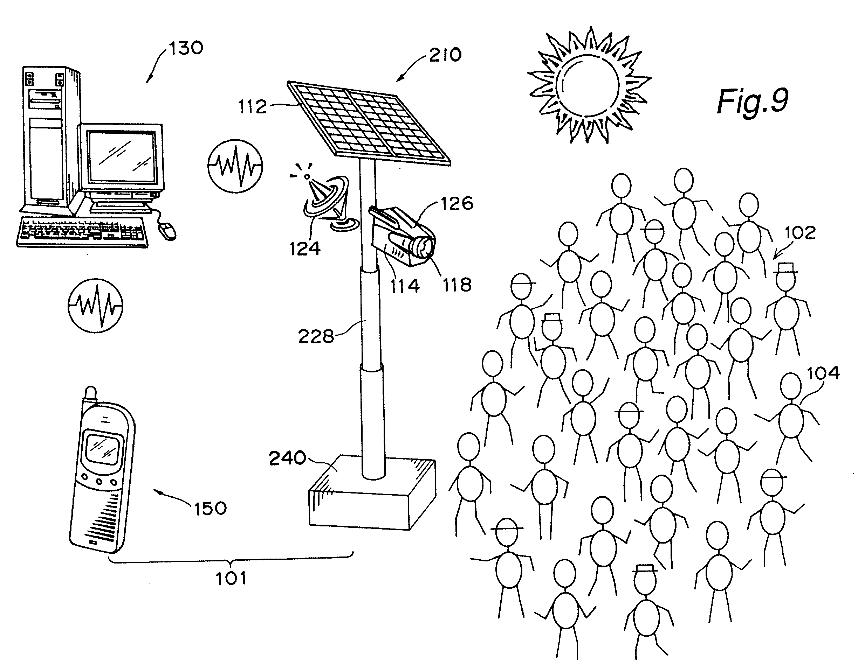

Next, with reference to Figs. 8 and 9, it is explained about the monitoring system according to a modification to the second embodiment.

That is, the monitoring system according to the modification has a basic constitution (or construction) which is similar to that of the monitoring system 101 according to the second embodiment; however, the former system is different from the latter system in the constitution of the monitor unit 210, as shown in Fig. 9.

More specifically, in the event place 102 where a multitude of the event participants 104, as objects to be monitored, come together, at least one monitor unit 210 is installed, or arranged, on at least one location. The monitor unit 210 has the electric power source 116, the water-proof housing 126, the digital camera 118 which is accommodated inside the housing 126, a post (or pole) 228 which supports the solar battery 112 and the housing 126, and a base part 240 to which the post 228 is fixed.

The electric power source 116 has the solar battery 112 and a secondary battery 114, as shown in Fig. 9. In a case that a light and small-sized (or compact) lithium ion battery is employed as the secondary battery 114, the second battery 114 can be accommodated inside the housing 126. The solar battery 112 is positioned at a top part of the post 228; and the housing 126 is positioned at an upper part of the post 228.

As shown in Fig. 9, the post 228 is of an expandable type in which the post 228 is made of three pipes with different diameters, and in which the post 228 can be expanded and contracted in three-step manner with a multi-step-expansion-and-contraction structure, for example. Namely, the lowest pipe (or bottom pipe) has a diameter which is greater than a diameter of the middle pipe, and the diameter of the middle pipe is greater than a diameter of the highest pipe (top pipe); when the post 228 is contracted or shorter, the highest pipe is inserted into the middle pipe and the middle pipe is inserted into the lowest pipe; and when the pipe is expanded or longer, the three pipes form a tapered single post 228 on the whole, in which the diameter of the top part of the post 228 is smaller than the diameter of the bottom part thereof, as shown in Fig. 9. In each connecting part between adjacent pipes thereof, there is provided conventional locking means for preventing the pipes from disassembling from each other when the post 228 is expanded.

With the multi-step-expansion-and-contraction structure, the storage and transportation (or conveyance) of the post 228 are facilitated.

The post 228 is fixed onto the upper surface of the base part 240 with the former being generally perpendicular to the latter. Different from the monitor unit 110 of the monitoring system 101 of the second embodiment, the monitor unit 210 does not have any movement means (or carriage means), for moving the monitor unit 210 itself, such as wheels under the base part 240. In other words, the base part 240 is directly put or placed on the ground or floor, so that inadvertent movement of the monitor unit 210 is prevented. However, if the user wants, he/she can lift up the monitor unit 210 together with the base part 240, and he/she can put the monitor unit 210 onto a separately prepared cart in order to move the monitor unit 210 to another desired place for its installment. That is, the monitor unit 210 can be carried and moved anytime as desired, although it has no movement means.

Incidentally, according to the second embodiment, the digital camera 118 takes still pictures. This is because the communication cost for the portable telephone is expensive at the present time, and because the reception and transmission of any data upon motion picture (moving image) leads to high cost. However, sharp rise in speed of the reception and transmission of data, and sharp reduction in the communication cost, are expected in future. When these are actually realized in future, it will be possible to employ a digital camera, a digital video camera, an analogue video camera, etc., which can take motion pictures, as photographing means.

The protocol employed between the monitor unit 110, 210 and the radio base stations 162, 164, and the protocol employed between the receiving and transmitting unit 153 and the radio base stations 162, 164, can be of the same type to each other, or can be of different types from each other. In a case that such different types of protocol are employed, it is necessary to provide a converter in the monitoring system in order to unify the types of protocol.

Alternatively, instead of employing the photographing condition data upon the date and time on which the image is taken, it is possible to employ and transmit any thumbnail image which has less amount of data and which shows a downsized image of its original one.

In a supposedly crowded region or field, a plurality of monitor units 110, 210 can be installed in a state in which adjacent monitor units 110, 210 are separated from each other with scores of meters (i.e. forty to fifty meters) therebetween, for example. On the other hand, when a supposedly crowded region is not crowded and another region is crowded, it is possible to move the monitor unit 110, 210 locating at the former region to the latter region, or it is possible to move any monitor unit 110, 210 accommodated in a warehouse (or storehouse) to the latter region, for example. Such a monitor unit 110, 210 which has been moved to a desired region or place can be readily employed.

In order to prevent the monitor unit 110, 210 from being stolen, it is possible to provide the post 128, 228 and/or the base part 140, 240 with a locking device such as a hook, and to connect the locking device and any stationary setting object (like a street lamp or a tree) nearly by a connecting device such as a chain, for example. Alternatively, in order to prevent the monitor unit 110, 210 from being stolen, it is possible to connect the post 128, 228 itself and/or the base part 140, 240 itself to any stationary setting object with a connector.

When the shake of the camera is referred to herein, this may include traditional means of moving a camera and may, include simply moving the camera.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

**1.** A monitoring system (1,101) for monitoring at least one event (2,4,104) in a monitoring region (102) to be monitored, comprising:
a monitor device (110,210) for monitoring the at least one event (2,4,104), in which the monitor device (110,210) is located to monitor the monitoring region (102);
an image server (30,130); and
a portable terminal device (50,150) by which an observer can monitor the at least one event (2,4,104), **characterized in that** the monitor device (110,210), the image server (130) and the portable terminal device (150) are connected to internet (160),
wherein the monitor device (110,210) comprises:
an electric power source (116) which includes an electric generator (112) for generating electricity on a basis of natural energy, and includes an electric accumulator (114) for storing the electricity generated by the electric generator (112).

**2.** A system as claimed in Claim 1 in which the image server is set in a place away from the monitoring region.

**3.** A system as claimed in Claim 1 or 2 including a photographing device for taking an image of the at least one event;
an image converter for converting the image taken by the photographing device (18,118) into an image signal;
a monitor-side receiving and transmitting device for receiving and transmitting the image signal and for receiving a control signal for controlling the photographing device with respect to the internet (16); and
a controller (20,120) for controlling each of the photographing device (18,118) for controlling each of the photographing device (18,118), the image converter and the receiving and transmitting means (24,124);
wherein the image server (30,130) comprises a server-side receiving and transmitting device (32,132) for receiving and transmitting the image signal with respect to the internet (60);
a data converter (34, 134) for converting the image signal into image data and for converting the image data into the image signal; and
a recorder (36, 136) for recording the image data,
wherein the portable terminal device (50, 150) comprises:
a portable-side receiving and transmitting device (53, 153) for receiving the image signal from the image server (130) and for transmitting the control signal with respect to the internet (60, 160);
an image converting device for converting the image signal which is received by the portable-side receiving and transmitting device (53, 153) into the image; and
an image display device (52, 152) for displaying the image, and
wherein the image of at least one event (21, 104) taken by the photographing device (18, 118) of the monitor device (101, 110, 210) is displayed on the image display device (52, 152) of the portable terminal device (50) through the internet (60, 160).

**5.** A system as claimed in Claim 3 in which the electric power source (116), the photographing device (118), the image converter, the monitor-side receiving and transmitting device (124) and the controller (120) are provided on a base part (140, 240) which can be moved.

**6.** A monitoring system as claimed in any preceding claim in which the at least one event that the system is for monitoring comprises one of an object, a target object or the state of growth of crops raised in a cultivated land.

**7.** A monitoring system (1) for monitoring a state of growth of crops (4) raised in a cultivated land (2), **characterized in that** there are provided:
a monitor device (10) for monitoring the crops (4), in which the monitor device (10) is set on the cultivated land (2);
an image server (30) which is set on a place away from the cultivated land (2); and
a portable terminal device (50) which is owned by an observer who monitors the crops (4) raised in the cultivated land (2), in which the monitor device (10), the image server (30) and the portable terminal device (50) are connected to internet (60),
wherein the monitor device (10) comprises:
an electric power source (16) which includes an electric generator (12) for generating electricity on a basis of natural energy, and includes an electric accumulator (14) for storing the electricity generated by the electric generator (12);
a photographing device (18) for taking an image of the crops (4);
an image converter (20) for converting the image taken by the photographing device (18) into an image signal;
a monitor-side receiving and transmitting device (24) for transmitting the image signal by wireless and for receiving a control signal for controlling the photographing device (18) by wireless, with respect to the internet (60); and
a controller (20) for controlling each of the photographing device (18), the image converter and the monitor-side receiving and transmitting device (24),
wherein the image server (30) comprises:
a server-side receiving and transmitting device (32) for receiving and transmitting the image signal with respect to the internet (60);
a data converter (34) for converting the image signal into image data and for converting the image data into the image signal; and
a recorder (36) for recording the image data,
wherein the portable terminal device (50) comprises:
a portable-side receiving and transmitting device (53) for receiving the image signal from the image server (30) by wireless and for transmitting the control signal by wireless, with respect to the internet (60);
an image converting device for converting the image signal which is receive by the portable-side receiving and transmitting device into the image; and
an image display device (52) for displaying the image, and
wherein the image of the crops (2) taken by the photographing device (18) of the monitor device (10) is displayed on the image display device (52) of the portable terminal device (50), through the internet (60).

**8.** The monitoring system as claimed in any preceding claim, wherein the electric generator (12) comprises at least one solar cell.

**9.** The monitoring system as claimed in any preceding claim, wherein an operation to take the image of the crops (4) executed by the photographing device (18) is performed periodically by a program stored on the controller (20) of the monitor device (10).

**10.** The monitoring system as claimed in any preceding claim, wherein an operation to take the image of the crops (4) executed by the photographing device (18) is performed on a basis of the control signal which is transmitted from the portable terminal device (50).

**11.** The monitoring system as claimed in any preceding claim, wherein an operation to transmit the image signal by wireless executed by the monitor-side receiving and transmitting device (24) is performed periodically by a program stored on the controller (20) of the monitor device (10).

**12.** The monitoring system as claimed in any preceding claim, wherein an operation to transmit the image signal by wireless executed by the monitor-side receiving and transmitting device (24) is performed on a basis of the control signal which is transmitted from the portable terminal device (50).

**13.** The monitoring system as claimed in any preceding claim, wherein the photographing device (18) of the monitor device (10) is placed at a high location commanding a view of the crops (4) raised in the cultivated land (2).

**14.** The monitoring system as claimed in any preceding claim, wherein the photographing device (18) of the monitor device (10) has a shaking device for shaking an optical system thereof, and has a zooming function to zoom a lens in the optical system.

**15.** A monitoring system (101) for monitoring at least one object (104) locating in a monitoring region (102) to be monitored, comprising:
a monitor device (110,210) for monitoring the at least one object (104), in which the monitor device (110,210) is placed in the monitoring region (102);
an image server (130) which is set on a place away from the monitoring region (102); and
a portable terminal device (150) which is owned by an observer who monitors the at least one object (104), **characterized in that** the monitor device (110, 210), the image server (130) and the portable terminal device (150) are connected to internet (160),
wherein the monitor device (110, 210) comprises:
an electric power source (116) which includes an electric generator (112) for generating electricity on a basis of natural energy, and includes an electric accumulator (114) for storing the electricity generated by the electric generator (112);
a photographing device (118) for taking an image of the at least one object (104);
an image converter (120) for converting the image taken by the photographing device (118) into an image signal;
a monitor-side receiving and transmitting device (124) for transmitting the image signal by wireless and for receiving a control signal for controlling the photographing device (118) by wireless, with respect to the internet (160); and
a controller (120) for controlling each of the photographing device (118), the image converter and the monitor-side receiving and transmitting device (124),
in which the electric power source (116), the photographing device (118), the image converter, the monitor-side receiving and transmitting device (124) and the controller (120) are provided on a base part (140, 240) which can be moved,
wherein the image server (130) comprises:
a server-side receiving and transmitting device (132) for receiving and transmitting the image signal with respect to the internet (160);
a data converter (134) for converting the image signal into image data and for converting the image data into the image signal; and
a recorder (136) for recording the image data,
wherein the portable terminal device (150) comprises:
a portable-side receiving and transmitting device (153) for receiving the image signal from the image server (130) by wireless and for transmitting the control signal by wireless, with respect to the internet (160);
an image converting device for converting the image signal which is received by the portable-side receiving and transmitting device (153) into the image; and
an image display device (152) for displaying the image, and
wherein the image of the at least one object (104) taken by the photographing device (118) of the monitor device (110, 210) is displayed on the image display device (152) of the portable terminal device (150), through the internet (160).

**16.** The monitoring system as claimed in any preceding claim, wherein the monitoring region (102) is an event place in which an event is held, and wherein the at least one object (104) is at least one event participant.

**17.** The monitoring system as claimed in claim 16, wherein the event is held irregularly.

**18.** The monitoring system as claimed in any of claims 15 to 17, wherein the electric generator (112) comprises at least one solar cell.

**19.** The monitoring system as claimed in any of claims 15 to 18, wherein an operation to take the image of the at least one object (104) executed by the photographing device (118) is performed periodically by a program stored on the controller (120) of the monitor device (110, 210).

**20.** The monitoring system as claimed in any of claims 15 to 19, wherein an operation to take the image of the at least one object (104) executed by the photographing device (118) is performed on a basis of the control signal which is transmitted from the portable terminal device (150).

**21.** The monitoring system as claimed in any of claims 15 to 20, wherein the base part (140, 240) comprises a carrier (142) for moving the monitor device (110, 210).

**22.** The monitoring system as claimed in any of claims 15 to 21, wherein the photographing device (118) of the monitor device (110, 210) is placed at a high location commanding a view of the at least one object (104) in the monitoring region (102).

**23.** The monitoring system as claimed in any of claims 15 to 23, wherein the monitor device (110, 210) comprises a supporter (128, 228) for supporting the photographing device (118) at the high location, and
wherein the supporter is a rod-shaped elongate member (128, 228) which has one of a multi-step-connection structure and a multi-step-expansion-and-contraction structure.

**24.** The monitoring system as claimed in any of claims 15 to 23, wherein the photographing device (118) of the monitor device (110, 210) has a shaking device for shaking an optical system thereof, and has a zooming function to zoom in the optical system.

**25.** A monitoring system (1, 101) for monitoring at least one target object (4, 104), which locates in a monitor place (2, 102) to be monitored, comprising:
a monitor device (10, 110, 210) for monitoring the at least one target object (4, 104), in which the monitor device (10, 110, 210) is set in the monitor place (2, 102);
an image server (30, 130) for receiving data upon an image of the at least one target object (4, 104), for storing the data, and for transmitting the data; and
a portable terminal device (50, 150) having a display device (52, 152) for displaying the at least one target object (4, 104), in which a user of the portable terminal device (50, 150) can monitor the at least one target object (4, 104) on the display device (52, 152),
**characterized in that** the monitor device (10, 110, 210), the image server (30, 130) and the portable terminal device (50, 150) are connected to internet (60, 160) by radio,
wherein the monitor device (10, 110, 210) has an electric power source (16, 116) which comprises a generator (12, 112) for generating electricity on a basis of natural energy and a secondary battery (14, 114) charged by the electricity, in which the monitor device (10, 110, 210) is driven by the electricity,
wherein the portable terminal device (50, 150) has a battery, in which the portable terminal device (50, 150) is driven by electricity of the battery, and
wherein the data upon the image of the at least one target object (4,104) is transmitted and received by radio.
